(19) Europäisches Patentamt / European Patent Office / Office européen des brevets

(11) **EP 1 273 996 B1**

(12) **EUROPEAN PATENT SPECIFICATION**

(45) Date of publication and mention
of the grant of the patent:
**06.08.2008 Bulletin 2008/32**

(51) Int Cl.:
**G06F 21/00** *(2006.01)*  **G06F 12/00** *(2006.01)*
**H04L 9/00** *(2006.01)*

(21) Application number: **02100772.9**

(22) Date of filing: **01.07.2002**

(54) **Secure bootloader for securing digital devices**

Sicherer Bootloader zum Sichern digitaler Geräte

Chargeur-amorce securise pur la securisation de un dispositif numeriques

(84) Designated Contracting States:
**DE FR GB**

(30) Priority: **06.07.2001  US 303743 P**
              **17.09.2001  US 954124**

(43) Date of publication of application:
**08.01.2003  Bulletin 2003/02**

(73) Proprietor: **Texas Instruments Incorporated**
**Dallas, Texas 75251 (US)**

(72) Inventors:
• **Cammack, William E.**
  **75214, Dallas (US)**
• **Kridner, Jason Douglas**
  **77041, Houston (US)**

(74) Representative: **Holt, Michael et al**
**Texas Instruments Limited**
**European Patents Department**
**800 Pavilion Drive**
**Northampton, NN4 7YL (GB)**

(56) References cited:
EP-A- 1 085 420       WO-A-00/10283
WO-A-00/79368        GB-A- 2 356 469
US-A- 5 892 904       US-A- 6 021 201

• "IEEE Std. 1149.1-1990" [Online] 21 May 1990
(1990-05-21) , INSTITUTE OF ELECTRICAL AND
ELECTRONICS ENGINEERS , NEW YORK
XP002249194 ISBN: 1-55937-350-4 Retrieved
from the Internet: <URL: http://
standards.ieee.org/> [retrieved on 2003-07-28] *
page 10 - page 12 *

**Description**

FIELD OF THE INVENTION

This invention relates generally to digital devices and specifically to providing security for digital devices and their contents during the power-up sequence of the digital devices.

BACKGROUND OF THE INVENTION

The Internet (the Information Superhighway) has provided the world with a way to rapidly and easily share vast amounts of information. Unfortunately, a large percentage of the information being disseminated is without the consent of the information's owner. There are numerous websites, Usenet newsgroups, and distributed-server networks located on the Internet whose express purpose is the illicit exchange of software programs and copyrighted materials such as music, movies, books, and art.

The illegal distribution of copyrighted music is particularly rampant, with some of the more popular distributed-server networks exchanging millions of compressed music files every day. In an attempt to reduce future lost revenue and preserving the rights of the copyright owners, a forum of more than 180 companies and organizations has created a set of guidelines known as the Secure Digital Music Initiative (SDMI).

SDMI specifies many guidelines concerning securing digital audio, but there are two primary security factors: security of content files and security of software and systems located inside a digital device. The securing of the content files is relatively simple and usually involves the use of some sort of encryption algorithm and an encryption/decryption key(s). Companies such as Liquid Audio and Intertrust have developed Digital Rights Management (DRM) software to protect content files stored on external media.

Providing security for the digital device playing the secured content file is more difficult because it involves protecting software executing on an inherently insecure programmable processor. Securing the digital device is difficult because the user has physical possession of the digital device while the manufacturer and the content provider does not. The user may attempt to hack the digital device through the software by using test equipment, logic analyzers, etc. or via physical means by replacing memory chips and other components in the digital device.

Since the user has physical possession of the digital device, the manufacturer cannot physically protect the hardware anymore than making it difficult for the user to physically modify circuitry inside the digital device. An extreme form of protection for the circuitry would be having circuitry that can detect tampering and would automatically self-destruct. Because the digital device costs money, the destruction of the digital device due to hacking when it was paid for with hard-earned money will deter most casual hackers.

In order to fully protect the software portion of the digital device, the manufacturer must provide security for all operational aspects of the digital device. From the very first operation that the digital device performs when it is first turned on to the last operation immediately before powering off, the software must be protected. Perhaps the most opportune time to hack into the software of a digital device is during its power-on sequence, also commonly referred to as the boot-up sequence. This is because during the power-on sequence, several different programs pass around the control of the digital device. If the hacker can cause the digital device to load up a program of his own design, he will gain complete control of the digital device.

Many inventions have attempted to provide power-on security for digital devices. Some require the use of adjunct security processors or chips. While this solution may be viable for complex and expensive devices such as computers, but for high-volume, low-profit margin digital devices such as audio players, active picture frames, and other digital appliances, the use of adjunct security processors is simply not a viable solution. U.S. Patents 5,421,006 and 5,379,342 present secured boot models using verification of the boot block of the operating system before control is transferred to the operating system.

U.S. Patent 6,185,678 (the '678 patent) presents a secure model that includes securing both the verification program and the memory storing the operating system. This patent uses cryptographic certificates that expire with time and limits the validity of steps within the power-on sequence to small slots of time. The security model presented in the '678 patent is therefore, unnecessarily complex.

U.S. Patent 5,937,063 presents a system to prevent unauthorized replacement of boot-up firmware embedded in modifiable memory such as flash memory and erasable-programmable read-only memory using the encryption and decryption of commands and instructions. This patent uses a secured boot device with its own built-in cryptographic unit.

U.S. Patent 5,892,904 presents a description of signature identity verification. It is based on a single identifier and requires a computer that is already booted.

P.C.T. Patent Application WO 00/79368 presents a system protecting data by separating account data, which is encrypted and escrowed, from application data and requires a computer that is already booted.

P.C.T. Patent Application WO 00/10283 presents an arrangement that is active on boot-up, requiring a single key or identifier.

Solutions that use executing programs in a protected memory space or a security coprocessor to provide security have a significant disadvantage in their requirement of a significant addition to the overall hardware requirements of the system. The increased hardware requirement results in a system with greater die area and hence greater costs.

A need has therefore arisen for a method and apparatus for providing a simple and secured power-on sequence for digital devices and their protected contents.

SUMMARY OF THE INVENTION

The present invention provides a method as set forth in the claims.

BRIEF DESCRIPTION OF THE DRAWINGS

The above features of the present invention will be more clearly understood from consideration of the following descriptions in connection with accompanying drawings in which:

Figure 1 illustrates a digital device according to a preferred embodiment of the present invention;
Figure 2 is a flow diagram displaying a typical sequence of steps occurring during a digital device's power-up process;
Figure 3 is a flow diagram displaying the operations performed by a secure bootloader loading an encrypted program file according to a preferred embodiment of the present invention; and
Figure 4 is a flow diagram displaying the operations performed by a secure bootloader operating in re-authoring mode according to a preferred embodiment of the present invention.

DETAILED DESCRIPTION OF ILLUSTRATIVE EMBODIMENTS

The making and use of the various embodiments are discussed below in detail. However, it should be appreciated that the present invention provides many applicable inventive concepts which can be embodied in a wide variety of specific contexts. The specific embodiments discussed are merely illustrative of specific ways to make and use the invention, and do not limit the scope of the invention.

Digital devices are vulnerable to attack from hackers wishing to obtain access to the devices' contents. The devices are especially vulnerable during the power-up (boot-up) sequence. In many digital devices, if the power-up sequence can be interrupted or a program different from the intended program can be loaded into the digital device during the power-up sequence, then the digital device becomes open to manipulation by the hacker.

Many manufacturers also include additional test hardware to facilitate testing of the devices during the manufacturing process. The same test hardware becomes another avenue of attack that can be exploited to overcome built-in security measures. Additionally, since the digital devices often include a microprocessor or a digital signal processor (DSP), the digital device becomes vulnerable to attack through these processors due to scan test hardware added by the microprocessor or DSP manufacturer to facilitate functional validation of the microprocessor or DSP during manufacture.

While the example used in the discussion of the present invention is a digital device, which implies a relatively simple, self-contained device that is hand-held and has a single function, the application of the present invention is not limited to these simple devices. The discussion also centers on protected music files, but the present invention is applicable to any file with protected content. The present invention has application in any digital device, including computers that undergo a power-up sequence and requires security for the content located in its memory or information kiosks that are basically self-contained computers placed in public places to provide information to users.

Central to security issue is the digital device itself, in this case, one that is capable of taking as input an encoded content file (either encrypted or unencrypted) and provides the decoded content to the user of the digital device. The encoded content file may be stored in memory inside the digital device or it may be stored on a memory card inserted into the digital device. Since a user usually purchases the digital device through a retail location and owns the device, the content provider has no control over what the user does to the device, i.e., the user may use it for its intended purpose or he may hack it to obtain access to the content files.

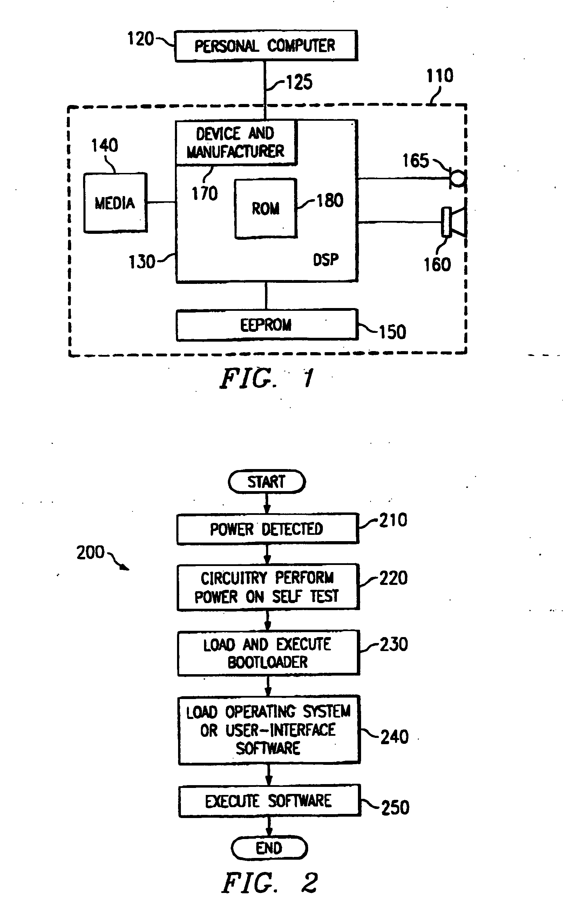

Referring now to Figure 1 for a block diagram illustrating a digital device 110 according to a preferred embodiment of the present invention. The digital device 110 displayed in Figure 1 is an audio player, built to play encrypted and unencrypted audio files. But as stated previously, the audio player is used solely for illustrative purposes and the present invention should not be construed as being limited to audio players. The digital device 110 is coupled to a personal computer 120 via a connector 125. According to a preferred embodiment of the present invention, the connector 125 between the personal computer 120 and the digital device 110 is a Universal Serial Bus (USB). However, a parallel data connector, a RS-232 serial connector, a Firewire connector, a radio frequency (RF) link, an infrared link, or any other type of connector, wired or wireless, which is capable of carrying data is a permissible substitute for the USB connector.

The personal computer 120 provides the content to the digital device 110 via the connector 125. The content may be music files, books-on-tape files, news, video, art, etc. Some of the content may be protected and some may be unprotected, depending on the content's owner and any agreements between the owner and the user. In an alternate embodiment of the present invention, the personal computer 120 is replaced by a direct network connection to the Internet, a piece of audio equipment, a cellular telephone, a personal digital assistant, or any other type of device that is capable of providing content to the digital device.

Internal to the digital device 110 is a digital signal processor (DSP) 130 which functions as a general-purpose microprocessor controlling the function of the digital device 110. The DSP 130 also decodes the content files for playing purposes. The DSP 130 also performs any encryption and decryption of the data required. The DSP 130 also has some internal memory, including some read-only memory. The read-only memory is for storage of programs and values that do not change. According to a preferred embodiment of the present invention, the read-only memory is a re-programmable read-only memory, permitting modification of programs and values stored in the internal memory. According to a preferred embodiment of the present invention, there are two types of read-only memory, the normal read-only memory that is accessible by programs executing on the DSP 130 and secure read-only memory.

Secure read-only memory, while similar in function to normal read-only memory, permits read access by only authorized programs. The secure read-only memory may be a part of the read-only memory and the DSP 130 simply not permitting unauthorized programs from addressing that particular portion of memory space or the secure read-only memory may be a memory separate from the normal read-only memory. For example, a user program without authorization executing on the DSP 130 would not be able to read the contents of secure read-only memory but would be able to read the contents of the normal read-only memory.

One of the security guidelines set forth by the SDMI requires the ability to bind content files to a single user or digital device. Binding the content files to a single user or digital device prevents the content file from being accessed on a different digital device. One way to do this is to uniquely identify each digital device and to use the unique identifier to bind the content file to the digital device.

In a location inside the read-only memory (ROM) or in a dedicated storage location internal to the DSP 130, are two storage locations. A first stores a manufacturer identifier that is used to identify the manufacturer of the digital device. Every digital device manufactured by the manufacturer will have an identical manufacturer identifier. A second stores a device identifier that is unique for each DSP 130. The device identifier can be used to bind an encrypted file for use to a single digital device since there are no other DSPs with the same device identifier.

The two identifiers are stored ROM where they cannot be modified, however programs executing on the DSP 130 may read the identifiers. This does not present a security issue because only programs authorized to execute on the DSP 130 are allowed to execute. Since they are located inside the DSP 130, attempts to physically modify the identifiers will likely result in destruction of the DSP 130. In another preferred embodiment of the present invention, the two identifiers would be stored in secured ROM where only a subset of the programs executing on the DSP 130 may be able to read the two identifiers.

According to a preferred embodiment of the present invention, the digital device 110 contains a DSP 130. However, the digital device 110 may have a general-purpose microprocessor or a micro-controller in place of (or in addition to) the DSP 130 and the digital device so equipped would function in an equivalent manner.

Also internal to the digital device 110 is some form of storage media 140 for storing the content files, a memory 150 for storing information and programs such as device drivers, encrypted device codes, encryption keys, validation keys, etc., and a speaker 160 and a headphone jack 165.

According to a preferred embodiment of the present invention, the memory 150 is an electrically erasable programmable read-only memory (EEPROM). However, other types of memory that can be reprogrammed and are non-volatile, i.e., the contents of the memory remain when the power is turned-off, are applicable. Examples of suitable memory alternatives include erasable programmable read-only memory (EPROM), Flash memory, non-volatile random access memory (NVRAM), and programmable read-only memory (PROM). The DSP 130 may also have some scratch random access memory (scratch RAM) for temporary storage purposes.

The storage media 140 is a storage location for content files. The storage media 140 may be permanently fixed inside the digital device 110 or it may be removable and attach to the digital device 110 through a slot or connector. According to a preferred embodiment of the present invention, the preferred form of the media 140 is compact flash (CF), however the present invention would be equally operable if multi-media card (MMC), NAND FLASH, Secure Digital (SD) memory card, or Memory Stick forms of media were used. According to another preferred embodiment of the present invention, other forms of storage are viable. They include floppy-disk drives, hard-disk drives, another processor (such as one connected to the digital device via a host port interface (HPI)), and network based storage (such as USB connected mass storage or TCP/IP based storage).

Referring now to Figure 2, a block diagram illustrates a typical power-on sequence 200 for the digital device 110. The power-on sequence 200 begins when the user presses the power button (or depending on the digital device, any button on the digital device). Multiple methods to power on the digital device are possible. After power is applied to the digital device 110, it performs what is commonly referred to as a power-on self-test (220) where intelligent components within the DSP 130 will perform checks on themselves and other internal components to verify proper operation.

If the components within the digital device 110 pass the power-on self-test, the DSP 130 begins a boot process by executing a bootloader software, which is stored in ROM (230). The bootloader software commonly resides in the DSP's read-only memory and transfers code, such as an operating system or a user-interface software, from an external source (EEPROM 150 or external ROM or RAM) to the DSP's program memory (240). Because the bootloader resides in the DSP's read-only memory, which normally resides on the same semiconductor chip as the DSP, it is relatively immune from attack since attempts to modify the contents of on-chip memory will typically result in the destruction of the DSP 130. Once the bootloader finishes loading the operating system software or the user-interface software, it completes its operation and turns execution control over to the newly loaded software.

The power-on sequence 200 is vulnerable to attack because if the hacker can replace the operating system or user-interface software with one of his own construction, he can have the digital device 110 operate in a way that he desires, a manner that is likely to be inconsistent with what the manufacturer intended. Normally, this is relatively easy to do since the operating system or the user-interface software is stored in EEPROM 150 or external ROM or RAM and would only require the hacker to replace the EEPROM 150 or external ROM or RAM with a different component. In order to prevent the digital device 110 from loading and executing the wrong operating system or user-interface software, a secure bootloader can be used.

The normal bootloader will load and execute any software it has been told to execute, without checking to verify the authenticity of the software. The secure bootloader, on the other hand, will only load and execute software that has been encrypted and authenticated. If the software was not encrypted and authenticated, the secure bootloader will not load and execute the software and pass control of the digital device to the software. The secure bootloader prevents unauthorized or modified code from being loaded and executed onto the DSP 130 that could compromise the security of the digital device 110 and its contents. Unauthorized or modified code could permit anyone to download code into the digital device.

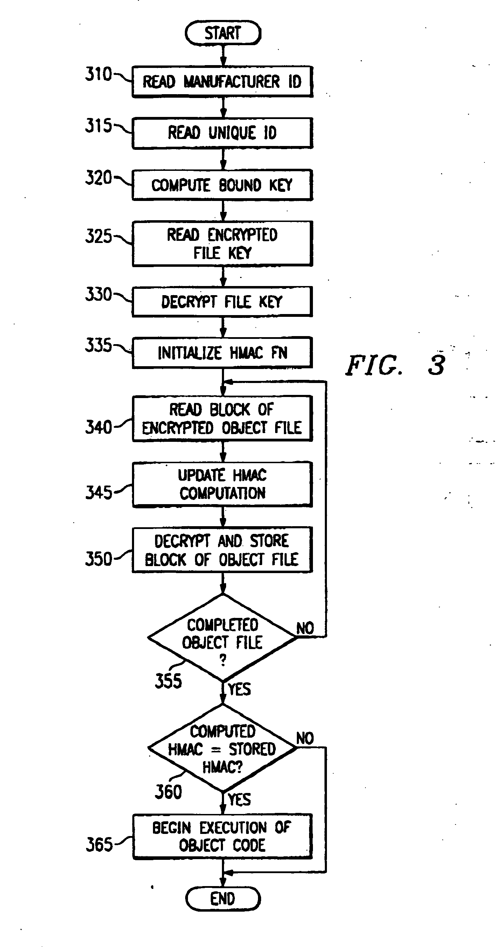

Figure 3 illustrates a flow diagram of an algorithm used by the secure bootloader for loading and executing encrypted software. The secure bootloader begins by reading the manufacturer identifier from the DSP 130. The manufacturer identifier is a unique identifier assigned to the manufacturer of the digital device 110 during the manufacturing process of the DSP 130. The secure bootloader also reads the device identifier from the DSP 130. There are however, circumstances when a device identifier is not needed or available. One such circumstance is during product development when the software is being developed for the digital device. In that instance, it is not efficient to have the software bound to a single digital device, so the software may be bound only to the manufacturer through the manufacturer identifier.

With the manufacturer identifier and perhaps the device identifier, the bootloader generates a decryption key (block 320). The bootloader uses the manufacturer and device identifiers if they are both available. If both identifiers are used in the decryption key generation, then the key is referred to as a bound key. If only the manufacturer identifier is used, then the key is an unbound key. According to a preferred embodiment of the present invention, a secure hashing function is used to generate the keys. The hashing function used is a commonly known secure hashing function known as SHA-1. SHA-1 takes an arbitrary length input and produces a 160-bit result. The actual keys are 128 bits long and are simply the first 128 contiguous bits of the 160-bit long result of the SHA-1 hashing function. It is to be understood that any arbitrary 128-bit long portion of the 160-bit SHA-1 result would result in an equally secure encryption system, but that it is simpler to chose the first 128 contiguous bits.

The bound key is produced by an operation expressible as:

$$\text{bound\_key} = \text{SHA-1}(\text{manufacturer identifier} \mid \text{device identifier})]_{128}$$

where the "|" is a concatenation operation and "$]_{128}$" means to use only the first 128 contiguous bits of the result. The unbound key is produced by an operation expressible as:

$$\text{unbound\_key} = \text{SHA-1}(\text{manufacturer identifier})]_{128}.$$

After generating the key (either a bound key or an unbound key), the secure bootloader reads a file key. The file key is an encrypted encryption/decryption key that is stored along with its encrypted file. Every encrypted file has associated with it a file key. In this instance, a file key is associated with an encrypted program file containing the operating system or user-interface program that the secure bootloader wishes to load. The secure bootloader must now decrypt the encrypted file key (block 330). According to a preferred embodiment of the present invention, the encryption and decryption algorithm used is the widely known SAFER SK-128 algorithm. The SAFER SK-128 is a symmetric encryption algorithm, meaning that a single key is used for both encryption and decryption. It is to be understood that other symmetric encryption/decryption algorithms, such as DES, AES, Blowfish, or RC5 to list a few.

The decryption of the file key is expressible as:

$$\texttt{decrypted\_file\_key = SAFERSK-128(file\_key, key)}$$

where file_key is the encrypted file key and key is either the bound key or the unbound key computed in block 320 and is used as the decryption key to decrypt the encrypted file key.

With the decrypted encryption/decryption key in hand, the secure bootloader begins to authenticate the validity of the encrypted program file. According to a preferred embodiment of the present invention, the secure bootloader uses a function known as a Hashed Message Authentication Code (HMAC) which has the formula shown below to authenticate the encrypted program file.

$$\texttt{HMAC = SHA-1(decrypted\_file\_key XOR } \textit{outerpad,}$$

where XOR is the bit-wise exclusive-or function, the *outerpad* is a sequence of the hexadecimal value 0x5c repeated 64 times and the *innerpad* is a sequence of the hexadecimal value 0x36 repeated 64 times.

According to a preferred embodiment of the present invention, the encrypted file is read a block at a time (block 340), the HMAC value is updated using the newly read block (block 345), and the block is decrypted and stored (block 350). This is repeated until the entire encrypted file has been read and decrypted. According to a preferred embodiment of the present invention, the encrypted file block, after being decrypted is loaded into memory. Alternatively, the decrypted file block may be stored in another portion of memory, not program memory. It should be easily understood that in another preferred embodiment of the present invention the entire encrypted file is read and decrypted in a single operation.

After the entire file has been decrypted and stored the secure bootloader reads the HMAC value that was stored with the encrypted file. The secure bootloader compares the read HMAC value with the HMAC value it has calculated. If the two HMAC values are the same, then the encrypted file has been authenticated and the bootloader can execute the program (block 365). If the HMAC values do not match, then the bootloader will cease execution. According to another preferred embodiment of the present invention, the bootloader would generate an error message prior to ceasing execution.

Since the stored HMAC value and the calculated HMAC values are generated using the decrypted file key, which was decrypted using either the manufacturer identifier or both the manufacturer and device identifiers, the hacker in all probability would not be able to generate a different HMAC value for his replacement program what would result in the comparison of the two HMAC values being equal. Therefore, if the two HMAC values match, then the encrypted program file must be the program file that is intended for the digital device.

During the manufacturing process for the digital device 110, it would be highly inefficient to encrypt the program file using each individual digital device's device identifier and store it into the digital device's memory 150. The inefficiency is due mainly in the difficulty of obtaining the device identifier and then encrypting the program file. Doing so would require a computer at each assembly station and would unnecessarily slow down the production line. Rather that reducing the overall production rate, a single generic encrypted program file is generated using the manufacturer identifier and stored in each digital device 110. The generic encrypted program file is encrypted using the manufacturer identifier and the same program file will execute on all digital devices made by that manufacturer. Then during the initial power-up, the secure bootloader will decrypt the encrypted program file and re-encrypt it using both the device identifier and the manufacturer identifier, locking the program file to the individual digital device. This process is referred to as re-authoring mode. The initial power-up can occur during functional test and quality control stages of the manufacturing process and would not add any additional time to the manufacturing process.

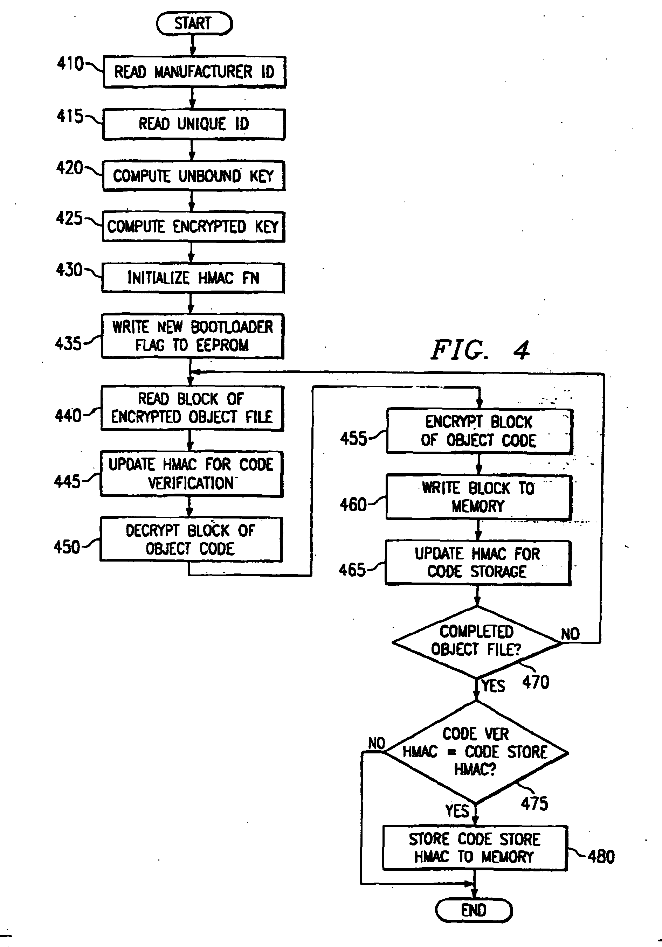

Referring now to Figure 4 for a flow diagram displaying an algorithm used by the secure bootloader for locking the program file to the individual digital device, also known as re-authoring mode. The secure bootloader used for re-authoring can be the same secure bootloader used for loading the encrypted program file during normal power-up sequences or it may be a special one-time use secure bootloader. According to a preferred embodiment of the present invention, the secure bootloader used for re-authoring is the same secure bootloader uses during normal power-up sequences. A bootloader mode flag is used to let the secure bootloader know which mode it should be operating in.

The secure bootloader reads the manufacturer identifier from the storage location and uses it to generate an unbound key. The unbound key is used to decrypt the encrypted program file, which was encrypted using an encryption key that used the manufacturer identifier. The unbound key is created using the operation:

$$\mathtt{unbound\_key}\ =\ \mathtt{SHA\text{-}1(manufacturer\ identifier)]_{128}}$$

where "$]_{128}$" means to use only the first 128 contiguous bits of the result.

The bootloader then creates the encryption key, which uses both the device identifier and the manufacturer identifier and is expressible as:

$$\mathtt{encryption\_key\ =\ SHA\text{-}1(manufacturer\ identifier\ |\ device}$$
$$\mathtt{identifier)]_{128}}$$

where the "|" is a concatenation operation and "$]_{128}$" means to use only the first 128 contiguous bits of the result.

After obtaining the encryption key, the secure bootloader changes the bootloader mode flag to normal secure bootloader operating mode and writes it to memory and then begins to authenticate the encrypted program file. As in the case where the secure bootloader is used to load the program file, the secure bootloader in re-authoring mode uses the Hashed Message Authentication Code (HMAC) function for authentication purposes. However, in re-author mode, the bootloader maintains two different HMAC values. One HMAC value is used for code verification, i.e., it is used to verify the authenticity of the program file being decrypted. The second HMAC value is used to generate an authentication value for the newly re-encrypted program file being created. The second HMAC value is for use by the secure bootloader to authenticate the re-encrypted program file each subsequent time the digital device 110 is powered up.

According to a preferred embodiment of the present invention, the encrypted file is read a block at a time (block 440), the first HMAC value is updated using the newly read block (block 445), the block is decrypted using the unbound key (block 450), the block is re-encrypted using the encryption key and stored to memory (blocks 455 and 460), and the second HMAC value is updated using the re-encrypted block. This is repeated until the entire encrypted file has been read and decrypted. It should be easily understood that in another preferred embodiment of the present invention the entire encrypted file is read and decrypted in a single operation.

After the entire file has been re-encrypted and stored, the secure bootloader reads the HMAC value that was stored with the encrypted file. The secure bootloader compares the read HMAC value with the first HMAC value it has calculated. If the two HMAC values are the same, then the re-encrypted file has been authenticated and the second HMAC value is stored to memory and the bootloader has completed. If the HMAC values do not match,

then the bootloader will cease execution and produce an error message.

JTAG hardware or to disable the JTAG hardware once functional testing and emulation is complete.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

**Claims**

1.    A method for ensuring security during the power-on process of a digital device including normal secure bootloader operation comprising the steps of computing a decryption key (320), reading an encrypted file key associated with a program file to be loaded (325), decrypting the encrypted file key (330), reading the program (340), calculating a hashing function of the program (345), decrypting and storing the program (350), comparing the calculated hashing function of the program with a stored hashing value (360) and beginning execution of the program if the calculated hashing function of the program matches the stored hashing value(365), the method further comprising:

  placing a bootstrap loader program (200) in a secure read only memory (180) within the digital device, the secure read only memory inaccessible from external to the digital device, the bootstrap loader program executing upon initialization of the digital device and controlling the method for ensuring security;
  placing a read only device identification code (170) in the digital device;

  wherein said step of computing a decryption key includes reading the device identification code (310, 315) and employs the device identification code (320);

wherein said device identification code consists of a manufacturer identifier assigned to the manufacturer of the digital device and a unique device identifier assigned to that particular digital device upon manufacture;

storing said program initially in a reprogrammable read only memory encrypted employing only said manufacturer identifier and not said unique device identifier;

the method including re-authoring operation comprising the steps of:

> reading the manufacturer identifier (410),
> reading the unique device identifier (415),
> computing a decryption key (420) from the manufacturer identifier,
> computing an encryption key from the manufacturer identifier and the unique device identifier,
> reading an encrypted file key associated with a program file to be loaded (325),
> decrypting the encrypted file key (330),
> reading the program (440),
> calculating a hashing function of the program (445),
> decrypting the program employing the computed decryption key (450),
> re-encrypting the decrypted program employing the computed encryption key,
> comparing the calculated hashing function of the program with a stored hashing value (475), and
> re-storing the re-encrypted program in the reprogrammable read only memory if the calculated hashing function of the program matches the stored hashing value (480).

2. The method of claim 1, further comprising the steps of:

> placing a bootloader mode flag on the digital device, said bootloader mode flag having an initial state upon manufacture indicating re-authoring mode and an alternative state indicating normal secure bootloader mode;
> reading the bootloader mode flag;
> if the bootloader mode flag indicates the re-authoring mode, performing the re-authoring operation and setting the bootloader mode flag to the alternative state indicating normal secure bootloader mode; and
> if the bootloader flag mode indicates the normal secure bootloader mode, performing the normal secure bootloader operation.

**Patentansprüche**

1. Verfahren zum Gewährleisten der Sicherheit während des Einschaltprozesses einer digitalen Vorrichtung mit einer normalen sicheren Bootloader-Operation, das die folgenden Schritte umfasst: Berechnen eines Entschlüsselungsschlüssels (320), Lesen eines verschlüsselten Dateischlüssels, der einer zu ladenden Programmdatei (325) zugeordnet ist, Entschlüsseln des verschlüsselten Dateischlüssels (330), Lesen des Programms (340), Berechnen einer Hash-Funktion des Programms (345), Entschlüsseln und Speichern des Programms (350), Vergleichen der berechneten Hash-Funktion des Programms mit einem gespeicherten Hash-Wert (360) und Beginnen der Ausführung des Programms, falls die berechnete Hash-Funktion des Programms mit dem gespeicherten Hash-Wert (365) übereinstimmt, wobei das Verfahren ferner umfasst:

> Anordnen eines Bootstrap-Loader-Programms (200) in einem sicheren Festwertspeicher (180) in der digitalen Vorrichtung, wobei auf den sicheren Festwertspeicher von außerhalb der digitalen Vorrichtung nicht zugegriffen werden kann, wobei das Bootstrap-Loader-Programm bei der Initialisierung der digitalen Vorrichtung ausgeführt wird und das Verfahren zum Gewährleisten der Sicherheit steuert;
> Anordnen eines Identifizierungscodes für eine Nur-Lese-Vorrichtung (170) in der digitalen Vorrichtung;

wobei der Schritt des Berechnens eines Entschlüsselungsschlüssels das Lesen des Vorrichtungs-Identifizierungscodes (310, 315) enthält und den Vorrichtungs-Identifizierungscode (320) verwendet;

wobei der Vorrichtungs-Identifizierungscode aus einem Herstelleridentifizierer, der dem Hersteller der digitalen Vorrichtung zugewiesen ist, und aus einem eindeutigen Vorrichtungsidentifizierer, der der bestimmten digitalen Vorrichtung bei der Herstellung zugewiesen wird, besteht;

Speichern des Programms zunächst in einem umprogrammierbaren Festwertspeicher auf verschlüsselte Weise unter Verwendung lediglich des Herstelleridentifizierers und nicht des eindeutigen Vorrichtungsidentifizierers;

wobei das Verfahren eine Operation des erneuten Redigierens enthält, die die folgenden Schritte umfasst:

Lesen des Herstelleridentifizierers (410),
Lesen des eindeutigen Vorrichtungsidentifizierers (415),
Berechnen eines Entschlüsselungsschlüssels (420) aus dem Herstelleridentifizierer,
Berechnen eines Verschlüsselungsschlüssels aus dem Herstelleridentifizierer und dem eindeutigen Vorrichtungsidentifizierer,
Lesen eines verschlüsselten Dateischlüssels, der einer zu ladenden Programmdatei (325) zugewiesen ist,
Entschlüsseln des verschlüsselten Dateischlüssels (330),
Lesen des Programms (440),
Berechnen einer Hash-Funktion des Programms (445),
Entschlüsseln des Programms unter Verwendung des berechneten Entschlüsselungsschlüssels (450),
erneutes Verschlüsseln des entschlüsselten Programms unter Verwendung des berechneten Verschlüsselungsschlüssels,
Vergleichen der berechneten Hash-Funktion des Programms mit einem gespeicherten Hash-Wert (475) und erneutes Speichern des erneut verschlüsselten Programms in dem umprogrammierbaren Festwertspeicher, falls die berechnete Hash-Funktion des Programms mit dem gespeicherten Hash-Wert (480) übereinstimmt.

2. Verfahren nach Anspruch 1, das ferner die folgenden Schritte umfasst:

Anordnen eines Bootloader-Betriebsart-Flags in der digitalen Vorrichtung, wobei der Bootloader-Betriebsart-Flag einen Anfangszustand bei der Herstellung hat, der die Neuredigierungsbetriebsart angibt, und einen alternativen Zustand hat, der eine normale sichere Bootloader-Betriebsart angibt;
Lesen des Bootloader-Betriebsart-Flags;
falls das Bootloader-Betriebsart-Flag die Betriebsart des erneuten Redigierens angibt, Ausführen der Operation des erneuten Redigierens und Setzen des Bootloader-Betriebsart-Flags auf den alternativen Zustand, der die normale sichere Bootloader-Betriebsart angibt; und
falls die Bootloader-Flag-Betriebsart die normale sichere Bootloader-Betriebsart angibt, Ausführen der normalen sicheren Bootloader-Operation.

## Revendications

1. Procédé pour garantir la sécurité pendant le processus de mise sous tension d'un dispositif numérique comprenant le fonctionnement sécurisé normal d'un programme de chargement d'amorçage comprenant les étapes consistant à calculer une clé de décryptage (320), lire une clé de fichier cryptée associée à un fichier de programme à charger (325), décrypter la clé de fichier cryptée (330), lire le programme (340), calculer une fonction de hachage du programme (345), décrypter et stocker le programme (350), comparer la valeur de hachage calculée du programme à une valeur de hachage stockée (360), et commencer l'exécution du programme si la fonction de hachage calculée du programme correspond à la valeur de hachage stockée (365), le procédé consistant en outre à :

- placer un programme de chargement d'amorçage dans une mémoire à lecture seule sécurisée (180) dans le dispositif numérique, la mémoire à lecture seule sécurisée étant inaccessible de l'extérieur du dispositif numérique, et le programme de chargement d'amorçage s'exécutant lors de l'initialisation du dispositif numérique et commandant le procédé garantissant la sécurité :
- placer un code d'identification de dispositif à lecture seule (170) dans le dispositif numérique ;

dans lequel l'étape de calcul de la clé de décryptage comprend la lecture du code d'identification du dispositif (310, 315) et l'utilisation du code d'identification du dispositif (320) ;
dans lequel ledit code d'identification du dispositif consiste en un identifiant de fabricant attribué au fabricant du dispositif numérique et en un identifiant de dispositif unique attribué au dispositif particulier lors de sa fabrication ;

- stocker ledit programme initialement dans une mémoire à lecture seule reprogrammable, crypté en utilisant uniquement ledit identifiant de fabricant et non ledit identifiant de dispositif unique ;

le procédé comprenant une opération de réécriture comprenant les étapes :

- lire l'identifiant de fabricant (410) ;
- lire l'identifiant de dispositif unique (415) ;
- calculer une clé de décryptage (420) à partir de l'identifiant de fabricant ;

- calculer une clé de cryptage l'identifiant de fabricant et de l'identifiant de dispositif unique ;
- lire une clé de fichier cryptée associée à un fichier de programme à charger (325) ;
- décrypter la clé de fichier cryptée (330) ;
- lire le programme (440) ;
- calculer une fonction de hachage du programme (445) ;
- décrypter le programme en utilisant la clé de décryptage calculée (450) ;
- recrypter le programme décrypté en utilisant la clé de cryptage calculée ;
- comparer la fonction de hachage calculée du programme à une valeur de hachage stockée (475) ; et
- restocker le programme recrypté dans la mémoire à lecture seule reprogrammable si la fonction de hachage calculée du programme correspond à la valeur de hachage stockée (480).

2. Procédé selon la revendication 1, comprenant en outre les étapes consistant à :

- placer un drapeau de mode de chargement d'amorçage sur le dispositif numérique, le drapeau de mode de chargement d'amorçage possédant un état initial lors de la fabrication, indiquant le mode de réécriture, et un autre état indiquant un mode de chargement d'amorçage sécurisé normal ;
- lire le drapeau de mode de chargement d'amorçage ;
- si le drapeau de mode de chargement d'amorçage indique le mode de réécriture, effectuer l'opération de réécriture et faire passer le drapeau de mode de chargement d'amorçage à l'autre état indiquant le mode de chargement d'amorçage sécurisé normal; et
- si le drapeau de mode de chargement d'amorçage indique le mode de chargement d'amorçage sécurisé normal, effectuer l'opération de chargement d'amorçage sécurisé normal.

120 — PERSONAL COMPUTER

125

110

140

MEDIA

DEVICE AND MANUFACTURER

170

ROM — 180

130

DSP

165

160

EEPROM — 150

*FIG. 1*

START

POWER DETECTED — 210

200

CIRCUITRY PERFORM POWER ON SELF TEST — 220

LOAD AND EXECUTE BOOTLOADER — 230

LOAD OPERATING SYSTEM OR USER-INTERFACE SOFTWARE — 240

EXECUTE SOFTWARE — 250

END

*FIG. 2*

FIG. 3

START

310 — READ MANUFACTURER ID

315 — READ UNIQUE ID

320 — COMPUTE BOUND KEY

325 — READ ENCRYPTED FILE KEY

330 — DECRYPT FILE KEY

335 — INITIALIZE HMAC FN

340 — READ BLOCK OF ENCRYPTED OBJECT FILE

345 — UPDATE HMAC COMPUTATION

350 — DECRYPT AND STORE BLOCK OF OBJECT FILE

355 — COMPLETED OBJECT FILE ? — NO

YES

360 — COMPUTED HMAC = STORED HMAC? — NO

YES

365 — BEGIN EXECUTION OF OBJECT CODE

END

START

410 — READ MANUFACTURER ID

415 — READ UNIQUE ID

420 — COMPUTE UNBOUND KEY

425 — COMPUTE ENCRYPTED KEY

430 — INITIALIZE HMAC FN

435 — WRITE NEW BOOTLOADER FLAG TO EEPROM

*FIG. 4*

440 — READ BLOCK OF ENCRYPTED OBJECT FILE

445 — UPDATE HMAC FOR CODE VERIFICATION

450 — DECRYPT BLOCK OF OBJECT CODE

455 — ENCRYPT BLOCK OF OBJECT CODE

460 — WRITE BLOCK TO MEMORY

465 — UPDATE HMAC FOR CODE STORAGE

COMPLETED OBJECT FILE? — NO

YES — 470

CODE VER HMAC = CODE STORE HMAC? — NO

YES — 475

STORE CODE STORE HMAC TO MEMORY — 480

END

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5421006 A
- US 5379342 A
- US 6185678 B
- US 5937063 A
- US 5892904 A
- WO 0079368 A
- WO 0010283 A